# EUROPEAN PATENT APPLICATION

(11) **EP 1 431 180 A1**
(43) Date of publication of application: **23.06.2004**
(21) Application number: 03028606.6
(22) Date of filing: 12.12.2003
(51) Int. Cl.: B65B 7/28

(54) **Device for withdrawing single objects from a feeder and for regularly spacing out said objects**

(30) Priority: 13.12.2002 IT BO20020786
(71) Applicant: MARCHESINI GROUP S.p.A., I-40065 Pian di Macina Pianoro (Bologna) (IT)
(72) Inventor: Monti, Giuseppe, 40065 Pianoro Bologna (IT)
(74) Representative: Dall'Olio, Giancarlo

(57) **Abstract**

The proposed device (D) for withdrawing single objects from a feeder and for regularly spacing out the objects, with the feeder (A) including an outlet channel (C) , along which the objects (10) are conveyed, arranged in the same way and in a row one after another, includes: carrier means (3) for intercepting and catching the foremost object (11) of the row of objects in the terminal section (CU) of the outlet channel (C), withdrawing means (4) for conveying the carrier means (3) to make them pass through the terminal section (CU), to hit and catch the foremost object (11), and to withdraw the foremost object from the outlet channel (C), means (5) for conveying the withdrawn objects (12) and connected to the withdrawing means (4) for directing and spacing out the objects (12) along the same conveying direction (S) and for conveying the equidistant objects (12) to a robotized manipulation station (SA).

## Description

The present invention relates to apparatuses for automatic or semi-automatic filling of receptacles, containers and/or bottles with products, their closing by the application of at least one cap of the type suitable to the type of product contained therein, and then packaging in a corresponding suitable package.

In particular, the present invention relates to a device, which can withdraw single objects from a feeder, ordering and spacing them out regularly, and which is situated between a bottle filling station and a station for closing the bottles with relative caps.

More in detail, the present invention relates to a device, which is capable of withdrawing, from feeding means, caps and stoppers and spacing them regularly from one another.

In the currently used machines, the bottles, filled at a filling station, are conveyed by a conveying line leading to a cap outlet channel.

The bottles are arranged in a row, one after another, on the conveying line, while the caps feeding means usually include hoppers or vibrating bowls.

The vibrating bowls convey the caps disposing them in accordance with a same orientation, for example with their mouth turned downwards, and arranging them in a row one after another in the outlet channel.

In its terminal section, the outlet channel features suitable holding means, for example a pre-loaded spring, which hold temporarily the row of caps in the channel until withdrawal thereof.

The conveying line is oriented in such a way, as to convey the bottles toward the terminal section of the outlet channel, so that the necks of the bottles are brought to pass at the terminal section of the outlet channel.

Practically, in known machines, coupling of the cap (or in sequence, of the stopper with the bottle neck from a first vibrating bowl and then of the cap with the same bottle neck from a second vibrating bowl) is usually obtained only due to the bottle neck striking and catching the cap, which is situated dwelling at the terminal section of the outlet channel, when the bottle passes therebelow.

The forward movement of the conveying line overcomes the contrast force of the holding means, so as to withdraw the cap caught by the bottle neck from the terminal section of the outlet channel: the bottle coupled with a relative cap, or with the combination stopper - cap, is then conveyed toward the next working station by the same conveying line.

Therefore, no control of perfect coupling of the cap (and/or also the stopper) is performed during this operation.

Actually, the bottles which, during their passage below the terminal section of the outlet channel have not hit and caught a relative cap for any reason, are all the same transferred by the conveying line toward the subsequent stations, where they are to be closed and packaged..

Thus, these bottles, together with their contents will be inevitably rejected.

Further, the coupling of the cap with the bottle only depends on the speed and type of operation of the conveying line, whose movement is subjected to the operation rate of the working stations before and after the station in which the cap is coupled with the bottle neck.

Consequently, the realization of the whole apparatus for packaging bottles is limited, because the lay-out arrangement, in particular the mutual configuration of various stations, is very complicated.

The object of the present invention is to propose a device, which is capable of withdrawing single objects from a feeder, in particular which is capable of withdrawing single caps and/or stoppers from relative feeding means, and of transferring them in an orderly way, spacing them regularly apart in a robotized manipulation station.

Another object of the present invention is to propose a device, which can withdraw single objects from a feeder, spacing them regularly one from another, and transfer them to a robotized manipulation station beside respective bottles, with which they are to be coupled and which are conveyed to the manipulation station by a relative conveying line.

A further object of the present invention is to propose a device, which can withdraw single objects from a feeder and space them regularly out, at the same distance corresponding to the distance between the necks of the subsequent bottles placed on the relative conveying line.

A still further object of the present invention is to propose a device, which can arrange and position with high precision, in a manipulation station, the caps beside relative bottles in such an order and configuration, that it is possible to use robotized means to perform coupling step, thus making the coupling operation independent from the operation way and from the type of the bottles conveying line.

A yet further object of the present invention is to propose a device, which can withdraw and position with high precision caps of complicated shape in a manipulation station.

It is also an object of the present invention to proposed a device, which controls the correct mutual positioning between the bottles and a corresponding number of caps to be coupled with the bottles, before the coupling step.

The above mentioned objects are achieved by the features of the independent claim, while preferred features are defined in the dependent claims.

The invention will now be described in more detail with reference to particular, non-limiting embodiments and with reference to the accompanying drawings, in which:
- Figure 1 is a schematic top view of the device proposed by the invention, as a whole;
- Figure 2 is a schematic prospective exploded view of significant elements of the proposed device;
- Figure 3 is a schematic, lateral enlarged view of the particular indicated with reference letter K in Figure 2.

With reference to the enclosed figures, the reference letter D indicates the device for withdrawing single objects 10 from a feeder A and for spacing them regularly, as proposed by the present invention, as a whole.

The objects 10 can be for example caps aimed at being coupled with corresponding containers F (receptacles, bottles, etc.), which are situated on a conveying line L of an automatic or semi-automatic apparatus for filling the containers with a product (or a plurality of products) and for packaging the filled containers in relative packages.

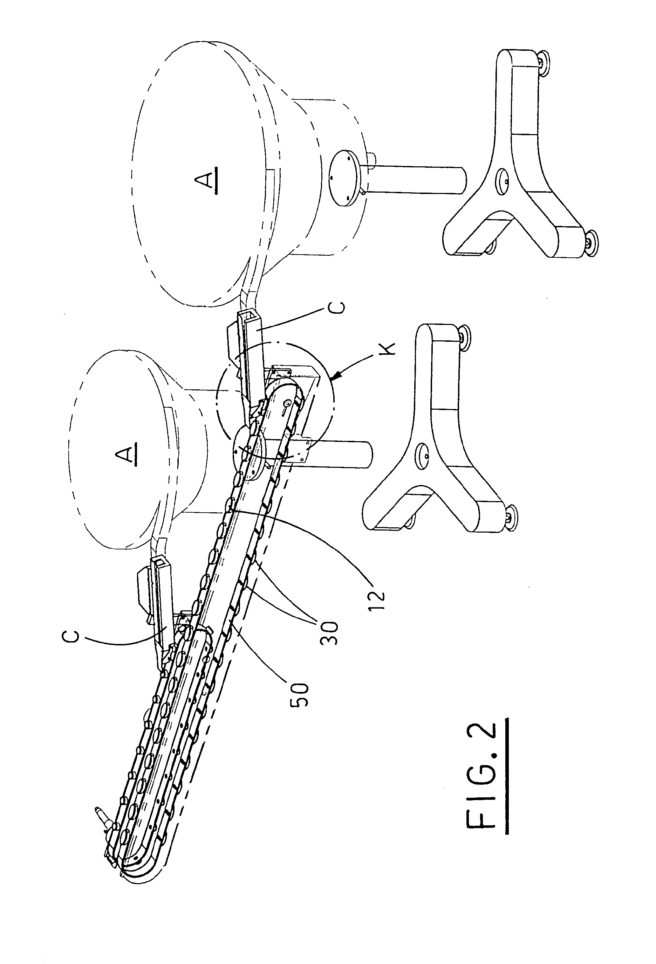

The feeder A, as shown for example in Figure 2, includes for example a hopper or a vibrating bowl containing thereinside, in bulk, the caps which are to be coupled with the necks of the bottles F, which are arranged in a row one after another, on a conveying line L.

The vibrating bowl A is equipped with an outlet channel C, along which the caps 10 are conveyed, oriented in the same way (for example with their mouths turned downwards), and arranged one after another.

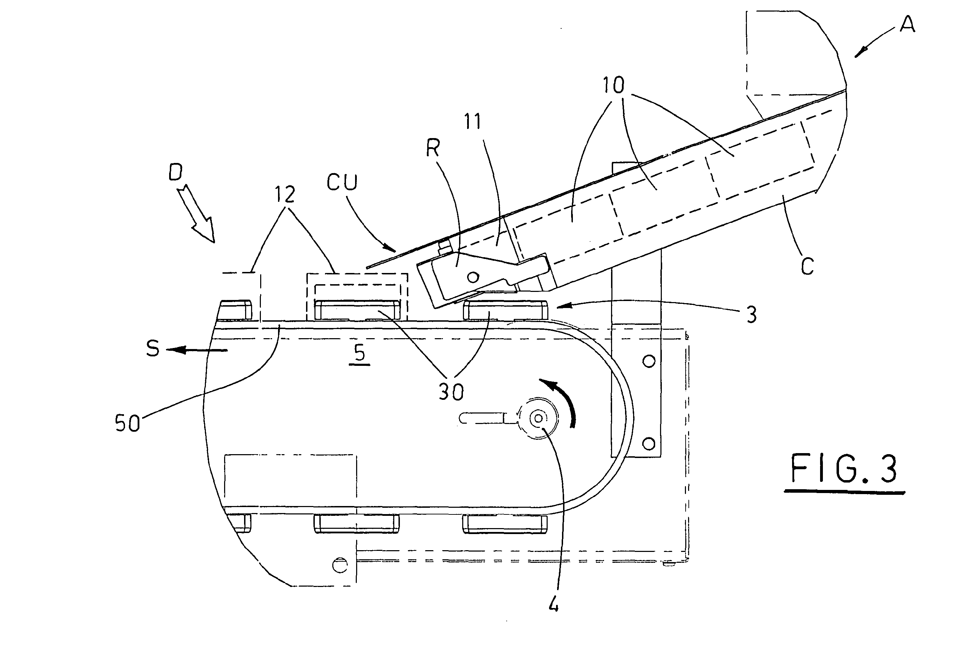

The terminal section CU of the outlet channel C (see for example Figure 3) is equipped with holding means R, e.g. a pre-loaded spring, aimed at retaining the foremost cap 11 of the row of caps 10 conveyed from the vibrating bowl A inside the outlet channel C, so as to temporarily hold the caps thereinside.

The device D proposed by the invention aims at withdrawing single and subsequent caps from the outlet channel C and at arranging them in equidistant configuration, and at conveying the withdrawn and regularly spaced apart caps 12 to a manipulation station, so as to allow the use of a robotized handling device to couple them with the necks of the bottles situated on the conveying line.

For this purpose, the device D includes carrier means 3 aimed at hitting and catching each time the foremost cap 11 situated at the terminal section CU of the outlet channel (Figure 3).

Withdrawing means are aimed at conveying the carrier means 3 through the terminal section CU, in order to make them hit and catch the foremost cap 11 and withdraw it from the outlet channel, so that the contrast action of the holding means is overcome with consequent forward movement of the row of caps 10 inside the channel, until a next foremost cap, to be withdrawn, goes in abutment against the holding means R.

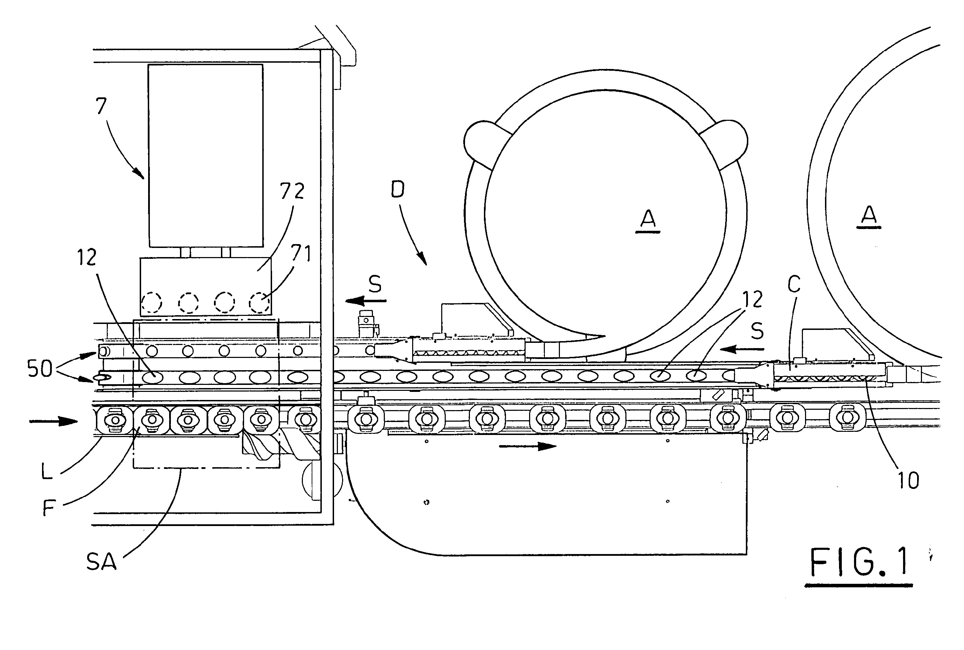

Conveying means 5 are connected to the withdrawing means 4 and set the withdrawn objects in order, spacing them regularly apart along a conveying direction S and convey them to a manipulation station SA (shown with broken line in Figure 1).

According to the embodiment shown as an example in the proposed figures, the carrier 3 include a plurality of protrusions 30, whose shape is complementary to the caps mouths. The conveying means 5 include an endless conveying belt 50, which supports the equidistant protrusions 30, spaced apart by a predetermined distance preferably corresponding to the distance between the necks of consecutive bottles F situated on the conveying line L. The withdrawing means include means (for example pulleys) for driving the conveying belt 50.

In the proposed figures, the conveying line 1 conveys the bottles F to the manipulation station SA: in this case, in order to optimize the layout of the bottles packaging apparatus, the conveying belt 50 is advantageously situated in such a way that it extends beside, for example parallel, to the conveying line and to have the initial portion of the active upper run in the terminal station CU of the outlet channel C of the vibrating bowl. The final portion of the upper run is situated in the manipulation station SA.

Thus, the conveying belt 50 conveys the caps 12, withdrawn from the outlet channel C and regularly spaced apart by the relative protrusions 30, to the manipulation station SA.

Likewise, the conveying line L conveys the bottles F, situated thereon one after another, to the manipulation station SA.

In particular, the conveying belt 50 and the conveying line L are operated in mutual step relation, so as to position respectively the caps 12 in registry with bottles F in the manipulation station SA, as shown in detail in Figure 1.

Moreover, the conveying belt 50 is aimed at being operated stepwise, in accordance with the corresponding stepwise operation of the conveying line.

In the proposed example, the conveying belt 50 places a group of four equidistant caps 12 in the manipulation station SA, while the conveying line L places there a group of four bottles F arranged in row one after another.

This mutual configuration between the group of four caps and a relative group of four bottles allows advantageously to use a robotized handling device 7 in the manipulation station SA.

The robotized handling device 7 picks up, transfers and couples the caps with the bottles necks completely autonomously with respect to the conveying line L and in a rapid and precise way.

For this purpose, the robotized handling device 7 includes suitable picking up means 71, which are supported by a relative working head 72 and which are aimed at picking up the group of four caps from the conveying belt 50, at transferring them above the conveying line L in a region above the group of four bottles, and at coupling the caps to the bottles.

Sensor means (not shown in the proposed figures) are also situated in the manipulation station SA, interfaced with the robotized handling device 7.

The sensor means are aimed at checking the exact matching of the reciprocal position between the group of four caps and the relative group of four bottles.

In case the sensor means detect the exact matching between the caps and the bottles, the robotized handling device 7 is activated to couple the caps with the bottles.

Otherwise, if exact matching is not detected, due to for example, the lack of one cap on a protrusion, the conveying belt is activated to place a subsequent group of other four caps in the manipulation station SA.

If the bottle neck is to be coupled, at the same time, with a stopper and a cap, the proposed device D includes, as in the embodiment shown in the enclosed figures, two conveying belts 50, arranged side by side and aimed at passing by the respective terminal sections of as many outlet channels of corresponding vibrating bowls A.

In this particular circumstance, the two conveying belts 50 have a different longitudinal extension and they are equipped with respective protrusions of different shapes: the protrusions of the conveying belt aimed at withdrawing the stoppers are suitable for intercepting the stoppers mouths, while the protrusions of the conveying belt aimed at withdrawing caps have the shape complementary to the caps mouths.

The proposed device is also versatile because it can be easily adapted to different types and shapes of the bottles necks simply due to the use of separate conveying belts, interchangeable between their operating pulleys 4 and equipped with protrusions, whose shape is complementary and corresponds to the type of cap, even of complicated shape, to be coupled with the bottle neck.

Moreover, the protrusions are equidistant by a distance corresponding to the distance between the necks of subsequent bottles arranged on the conveying line.

It results obvious from the previous description that the device proposed by the present invention allows in an efficient and functional way, to withdraw, from a relative feeder outlet channel, a group of caps and regularly space the withdrawn caps apart, sending and positioning them in a manipulation station, in which a robotized handling device can be used to couple the caps with relative bottles positioned on a conveying line, in an extremely rapid and reliable way.

In this way, advantageously with respect to the devices of prior art, the coupling of the caps with the bottles is independent from the way of operating the bottles conveying line.

This is undoubtedly a considerable advantage for the whole apparatus, which allows to optimize the layout of different working stations.

Further, conveying equidistant caps to a suitable manipulation station allows advantageously to use suitable sensor means to check the matching between the group of caps and the relative group of bottles to which the caps are to be coupled, before the robotized handling device activation.

This checking allows to avoid, advantageously with respect to the prior art apparatuses, conveying bottles without the relative caps, which would be inevitably rejected, to the closing and packaging station.

This is possible by simply moving the conveying belt 50 until a subsequent group of caps is arranged in registry with the group of bottles to be coupled with the caps.

Moreover, the proposed device is obtained by a technical solution, which is reliable and functional in any working and operating conditions, and with a limited number of cheap elements.

## Claims

1. Device for withdrawing single objects from a feeder and for regularly spacing out said objects, with said feeder (A) including an outlet channel (C), along which said objects (10) are conveyed, arranged in the same way and in a row one after another, with a terminal section (CU) of said channel (C) being equipped with holding means (R), aimed at retaining the foremost object (11) of said row of objects (10), so as to temporarily hold said foremost object inside said channel; said device (D) being **characterized in that** it includes:
carrier means (3) aimed at hitting and catching said foremost object (11) in said terminal section (CU) of said channel (C);
withdrawing means (4) for conveying said carrier means (3) to pass through said terminal section (CU), for hitting and catching said foremost object (11), and for withdrawing said foremost object (11) from said outlet channel (C), and capable of overcoming the contrast action of said holding means (R), which results in forward movement of said row of objects (10) until a subsequent foremost object (11), to be withdrawn, is retained by said holding means (R), and
conveying means (5) for the withdrawn objects (12), operatively connected to said withdrawing means (4) for directing and arranging the objects (12) regularly spaced out along the same conveying direction (S) and for conveying the equidistantly set objects (12) to a manipulation station (SA).

2. Device according to claim 1, **characterized in that** said carrier means (3) include a plurality of protrusions (30) with a shape complementary to an opening, made in a lower part of said objects (11), and **in that** said conveying means (5) include at least one conveying belt (50) for supporting said protrusions spaced out with respect to one another, and that said withdrawing means (4) include driving means of said conveying belt (50), said conveying belt (50) being moved to pass near said terminal section (CU) of said outlet channel (C), so that said protrusions (30), one by one, hit and catch respective foremost objects (11) conveyed from. said outlet channel (C) to the relative terminal section (CU), and so that single objects (11) are withdrawn and conveyed, spaced out, by said protrusions (30) along the conveying direction (S) toward said manipulation station (SA).

3. Device according to claim 2, **characterized in that** said conveying belt (50) supports a plurality of protrusions (30), which are regularly spaced apart by a predetermined distance, said protrusion hitting and catching, one by one, respective foremost objects (11), and conveying the withdrawn objects (11) toward said manipulation station (SA).

4. Device according to claim 3, **characterized in that** said conveying belt (50) is arranged beside a conveying line (L) of bottles (F), with which said withdrawn and equidistant objects are to be coupled, with said conveying line (L) conveying the bottles (F) to said manipulation station (SA).

5. Device according to claim 4, **characterized in that** said conveying belt (50) is moved in the direction opposite to the movement direction of said conveying line (L).

6. Device according to claim 5, **characterized in that** said conveying belt (50) is an endless conveying belt.

7. Device according to claim 3 and 4, **characterized in that** said conveying belt (50) transfers and positions said objects, withdrawn and regularly spaced apart by said protrusions (30), in said manipulation station (SA), so that a group of said objects faces and is opposite to a corresponding group of containers (F) conveyed by said conveying line (L) to the manipulation station (SA).

8. Device, according to claim 7, **characterized in that** a robotized handling device (7) is situated in said manipulation station (SA) for picking up and transferring said group of objects from the protrusions (30) of said conveying belt (50) to said conveying line (L), in order to couple the objects with said group of containers (F).

9. Device, according to claim 8, **characterized in that** said robotized handling device includes a working head (72), which moves a plurality of pick up means (71), whose number is equal to or bigger than the number of objects to be coupled to the group of containers (F).

10. Device, according to claim 8, **characterized in that** it includes sensor means, situated in said manipulation station (SA) for verifying the presence of said objects on the respective protrusions (30).

11. Device, according to claim 8, **characterized in that** it includes sensor means, situated in said manipulation station (SA) for detecting the correct matching of the position of said group of objects on the conveying belt (50) with respect to the position of said group of containers (F) on said conveying line (L).

12. Device, according to claim 4, **characterized in that** said conveying belt (50) and said conveying line (L) are operated stepwise, in mutual step relation.

13. Device, according to claim 3 and 7, **characterized in that** it includes at least two conveying belts (50), situated one beside another and beside a line (L) for conveying containers (F), with which containers said withdrawn objects are to be coupled, with each of said conveying belts (50) passing near a terminal section (CU) of an outlet channel (C) of respective feeders (A) of objects to be coupled with said containers (F), so that the protrusions (30), one by one, hit and catch respective foremost objects (11) conveyed by said outlet channels (C) to the terminal station (CU), said conveying belts (50) withdrawing single objects (11) and conveying said objects, regularly spaced apart by said protrusions (30), to said manipulation station (SA).
